# EUROPEAN PATENT APPLICATION

(11) **EP 4 841 210 A1**
(43) Date of publication of application: **18.11.2026**
(21) Application number: 26178804.6
(22) Date of filing: 14.05.2026
(51) Int. Cl.: G01B 11/275, G01B 11/27

(54) **VEHICLE SERVICE SYSTEM AND RELATED METHOD OF OPERATION**

(30) Priority: 15.05.2025 IT 202500010990
(71) Applicant: Texa S.p.A., 31050 Monastier di Treviso (TV) (IT)
(72) Inventor: VIANELLO, Bruno, 31050 MONASTIER DI TREVISO (TV) (IT)
(74) Representative: Studio Torta S.p.A.

(57) **Abstract**

Vehicle service system (1) comprising a vehicle lift (4) with wheel-mounted clamps (8) that are coupled to the respective wheels (3) of the vehicle (2), a vehicle servicing system (1) comprising two image acquisition devices (15) mounted on opposite ends of a horizontal support bar (13), each comprising two front-facing cameras (16) (18) which have respective fields of view that differ from one another and are directed towards respective wheel targets (8) of the vehicle (2) in such a way that a first camera (16) captures images of the wheel targets (8) when the vehicle lift (4) is in the first position, and a second camera captures images of the wheel targets (8) when the lift (4) is in the second position.

## Description

### CROSS-REFERENCE TO RELATED PATENT APPLICATIONS

This application claims priority from Italian Patent Application No. 102025000010990 filed on 15 May 2025, the contents of which are incorporated herein by reference.

### TECHNICAL FIELD

The present invention relates to a vehicle service system and the corresponding method of operation.

### STATE OF THE ART

Vehicle service systems are known to comprise: a set of wheel targets mounted on the vehicle's wheels, a lift capable of moving the vehicle from a lowered position to a raised position, and a vehicle servicing apparatus positioned facing the lift and configured to capture images of the wheel targets and determine the wheel alignment based on the captured images.

Some of the aforementioned vehicle service systems are provided with a structure comprising a horizontal bar that is vertically movable and includes two image-capturing devices mounted at the two opposite ends of the bar.

Each image capture device comprises a front-facing camera that is directed towards the lift to capture images of the wheel targets.

The two front-facing cameras undergo a calibration process that determines their so-called 'poses', which are the relative spatial positions of the two cameras in relation to one another and to a predefined reference system.

During the wheel alignment check, the vehicle service system performs the following operations: it captures images of the wheel targets via the two front-facing cameras; it determines whether the wheels are correctly or incorrectly aligned based on the images of the wheel targets, taking into account the relative spatial positions of the two cameras; and provides the operator with information regarding whether the alignment is correct or incorrect.

Generally, the aforementioned alignment check procedure is carried out initially during an early step of the operation, whilst the vehicle is positioned on the lifting platform in the lowered position.

If, during the first operating phase, a wheel misalignment condition is detected, the method performs a second operating phase in which the vehicle lift is moved from the lowered position to the raised position so as to place the vehicle at a predetermined height above the ground, thereby facilitating manual interventions on the wheel adjustment members arranged beneath the underbody of the vehicle in order to modify the wheel alignment.

During the second operating phase, the operator is assisted by the vehicle service apparatus, which monitors whether the wheel alignment, as modified through the manual adjustments, satisfies the correct alignment condition.

A technical problem of the systems described above is that the two cameras have a field of view which is adequate for capturing the four wheel targets during the first operational phase but is unsatisfactory during the second operational phase, when the lift is in the raised position.

It should be noted that the vehicle service apparatus is further subject to height-related dimensional constraints, which limit the maximum vertical travel of the bar and therefore limit the extent to which the cameras can be raised to a height sufficient to satisfactorily overcome the above-mentioned technical problem.

### DESCRIPTION OF THE INVENTION

The aim of the present invention is therefore to provide a vehicle service system that overcomes the aforementioned technical problems.

In accordance with this objective, the present invention provides a vehicle service system as defined in the relevant independent claims and, preferably but not necessarily, in any of the claims dependent thereon.

In accordance with the aforementioned objective, the present invention also provides a vehicle measuring apparatus as defined in the relevant independent claims and, preferably but not necessarily, in any of the claims dependent thereon.

In accordance with the aforementioned objective, the present invention also provides a method of operating a vehicle service system as defined in the relevant independent claims and, preferably but not necessarily, in any of the claims dependent thereon.

The claims describe preferred embodiments of the present invention and form an integral part of this description.

### BRIEF DESCRIPTION OF THE DRAWINGS

The present invention will now be described with reference to the accompanying drawings, which illustrate a non-limiting example of its implementation, wherein:
- Figures 1 and 2 are two perspective views of a vehicle servicing system made in accordance with the present invention, in which the lift is in a first and second position respectively,
- Figure 3 is a front elevation view of the vehicle service apparatus of the vehicle service system illustrated in Figure 1,
- Figure 4 is a perspective view of an image acquisition device for the vehicle service apparatus illustrated in Figure 3,
- Figure 5 is a section IV-IV of the image acquisition device illustrated in Figure 4,
- Figure 6 is a front view of an image capture device of the vehicle service apparatus shown in Figure 3,
- Figure 7 is a further perspective view of an image capture device from the vehicle service apparatus shown in Figure 3,

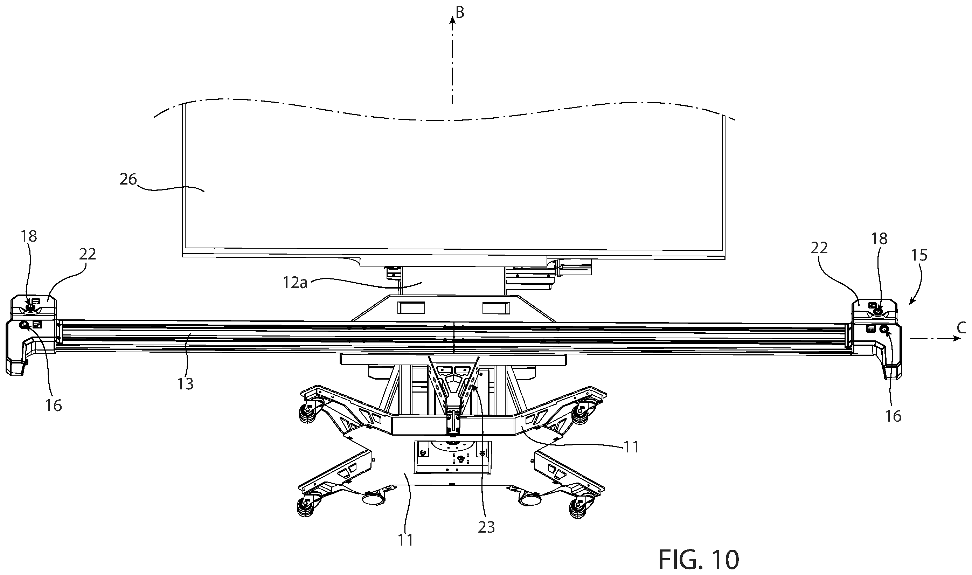

- Figures 8, 9 and 10 are perspective views of the lower portion of the vehicle service apparatus constructed in accordance with the present invention.

### PREFERRED EMBODIMENTS OF THE INVENTION

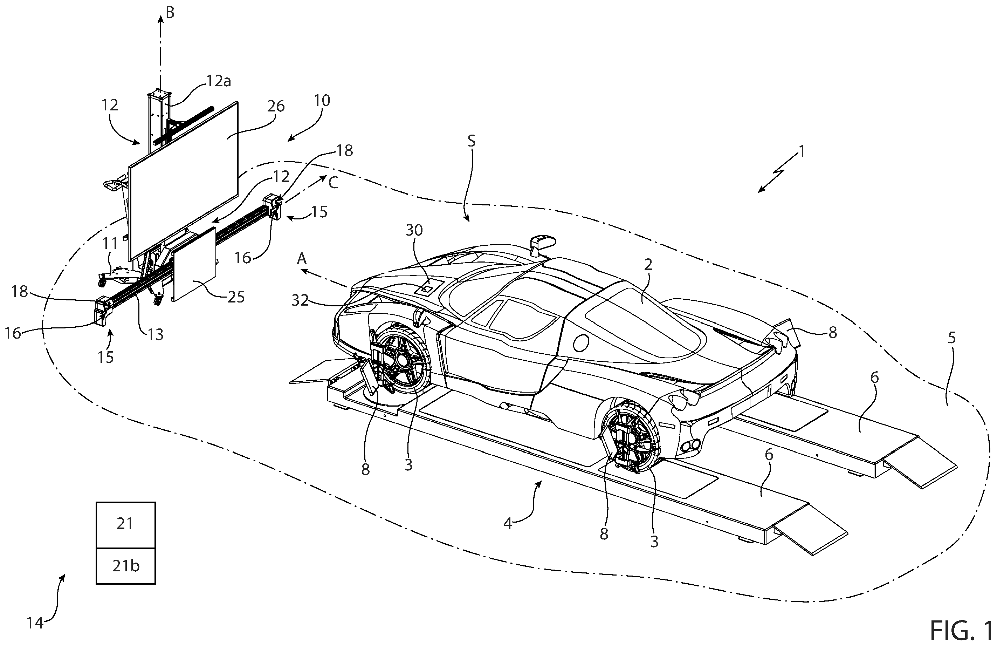

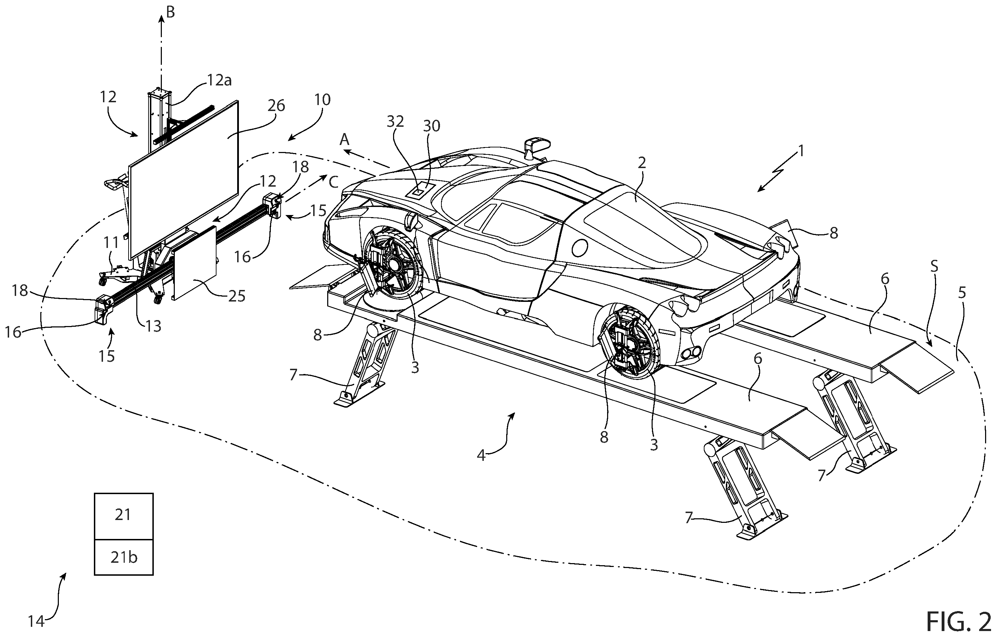

With reference to Figures 1 and 2, reference number 1 generally indicate as a whole a vehicle service system arranged in a vehicle service area 5. According to a preferred embodiment, the vehicle service system 1 is configured to perform a wheel alignment check of the wheels 3 of a vehicle 2.

According to a preferred embodiment, the vehicle service system 1 is configured to perform a alignment check of wheel 3 on a vehicle 2.

The vehicle service system 1 is configured to measure/determine geometric alignment parameters indicative of the alignment of the wheels 3 of a vehicle 2 and performs the aforementioned wheel alignment check on the wheels 3, by determining wheel alignment information for the wheels 3 on the basis of the measured/determined geometric parameters.

Hereinafter, with the term "wheel 3" will be meant a standard wheel on a motor vehicle that makes contact with the ground, comprising at least one tyre and a rim.

Furthermore, in the following discussion, with the term 'vehicle 2' will be meant a motor vehicle, such as a car or a motor vehicle. In the attached figures, vehicle 2 is represented as a car fitted with four wheels 3 resting on the ground S, which are arranged laterally in pairs on opposite sides. The wheels 3 are coupled to two corresponding axles, front and rear (not shown). The front and rear axles of vehicle 2 have a predetermined wheelbase between them. Vehicle 2 also comprises suspension adjustment mechanisms (not shown) configured to allow the operator to modify the geometric parameters of the wheels relating to their alignment.

It is understood that the application of the vehicle service system 1 shown in the attached figures and described in the following description is not to be considered limited to a passenger car, but may be extended to any type of motor vehicle provided with any number of wheels 3, any number of axles, and any wheelbase. As an alternative to a passenger car, vehicle 2 could, for example, be: a lorry, a truck, or a coach.

The geometric alignment parameters determined by vehicle service system 1 may include at least the following parameters: the wheel toe angle or plane, the wheel camber angle or plane, and the wheel convergence angle or plane. These angles or planes may preferably be determined with respect to at least one predefined three-dimensional reference system (SR). The characteristic geometric parameters of the wheels 3 used by vehicle service system 1 to control, for example, the vehicle's wheel alignment, are well known and will therefore not be described further.

The SR reference system is schematically represented in the attached figures and in the examples shown, and comprises a set of mutually orthogonal Cartesian axes, three of which are labelled x, y and z.

According to the present invention, the vehicle service system 1 comprises a vehicle lift 4, which is arranged to rest on the ground S within the vehicle service area 5. The vehicle lift 4 comprises a movable platform 6 which is configured to support the vehicle 2 on an approximately horizontal support surface. The vehicle lift 4 is configured to move, on command, the movable platform 6 between a first position adjacent to the ground S, i.e. a lowered position (Figure 1), and a second position, in which the platform 6 is raised and is arranged above the first position at a specific height above the ground S (Figure 2). As shown in the attached figures, the vehicle lift 4 has a longitudinal axis A and may comprise an actuator mechanism 7 which is articulated to the platform 6 to move it, in response to a movement command, between the first and second positions, and vice versa. The movement of the platform 6 may be carried out in a known manner, by means of a vertical displacement and/or by means of a partially rotational lifting movement of the platform 6, during which the supporting surface remains substantially horizontal. The actuator mechanism 7 may, for example, comprise a column-type structure, a scissor-lift structure, or the like, interposed between the ground surface S and the platform 6.

With reference to Figures 1 and 2, the vehicle service system 1 also comprises a series of wheel targets 8 which are removably mounted/coupled onto the wheels 3 of vehicle 2. In the exemplary embodiment shown in Figures 1 and 2, the vehicle service system 1 comprises four wheel targets 8 (two mounted on the front wheels and two on the rear wheels), each comprising a plate-like body or panel approximately transverse to axis A and a predetermined pattern arranged on one face of the panel.

With reference to Figures 1 and 2, vehicle service system 1 also comprises a vehicle service apparatus 10.

With reference to Figures 1 and 2, the vehicle service apparatus 10 rests on the ground S (floor) in front of one side (front or rear) of the vehicle lift 4 in the service area 5, preferably transverse to axis A.

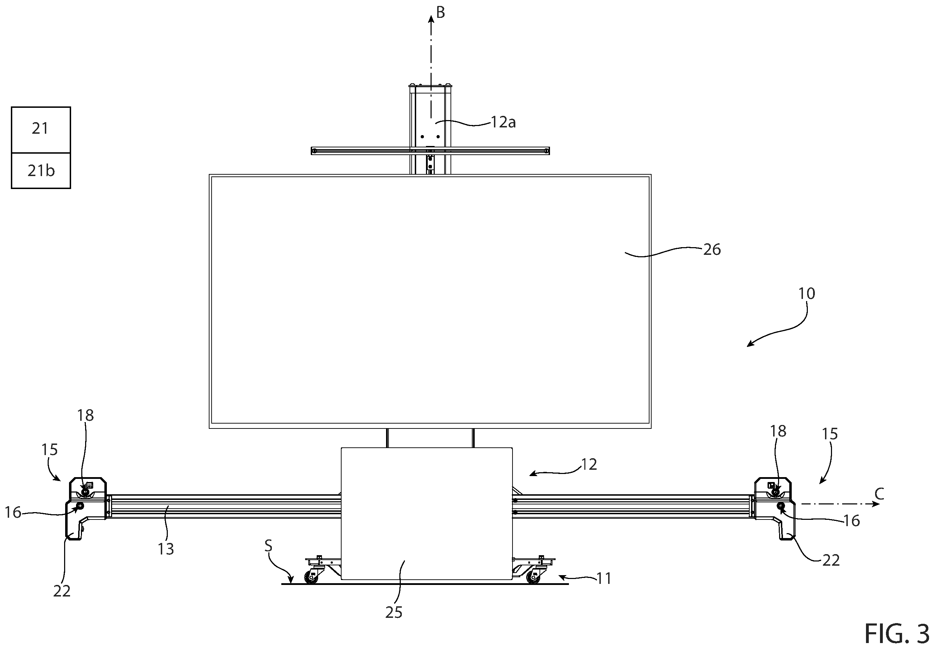

With reference to Figures 1, 2 and 3, the vehicle service apparatus 10 comprises a support platform or base unit 11, which is positioned on the ground S. The base unit 11 may preferably be movable on the ground S (in one or more directions), for example by means of swivel wheels.

The vehicle service apparatus 10 also comprises a frame or support structure 12, which is mechanically coupled to the base unit 11. The vehicle service apparatus 10 further comprises a support bar 13 which is mechanically coupled to the support structure 12. The support structure 12 may comprise a column 12a which extends along an axis B, preferably vertical, and is coupled at its lower end to the base unit 11. Conveniently, the column 12a may be configured so as to rotate about axis B relative to the base unit 11. Axis B is approximately vertical.

Support bar 13 extends along axis C, which is approximately horizontal and perpendicular to axis B, above the base unit 11. Support bar 13 may comprise, for example, a rod or cross-member consisting of a straight profile made of a rigid material, preferably metallic, such as aluminium or similar. The bar 13 preferably has a quadrangular crosssection and is dimensioned such that it extends in cantilever from the support structure 12, thereby extending laterally beyond the measuring apparatus 10 on both opposite sides. The support bar 13 is supported centrally by the support structure 12 and is configured to move vertically along a direction parallel to the B-axis, towards and away from the base unit 11 below.

With reference to Figures 1 and 2, the vehicle service apparatus 10 comprises an electronic system 14. According to an embodiment shown in the attached Figures, the electronic system 14 comprises an electronic control unit 21 and, preferably, two image capturing devices 15, which are permanently mounted (fixed) on opposite ends of the support bar 13.

According to the present invention, the two image acquisition devices 15 comprise two pairs of front-facing cameras 16 and 18. It is understood that, in the present description, the term "camera" refers to any device that captures images and therefore also includes photographic cameras, or any similar device configured to capture images.

According to the present invention, the pair of front cameras 16 and the pair of front cameras 18 of the two image-capturing devices 15 have respective fields of view for capturing images, which are directed towards respective wheel targets 8 of the vehicle 2 in order that: the front cameras 16 of the first pair capture images of the wheel targets 8 when the vehicle lift 4 is in the first position (Figure 1) and the front cameras 18 of the second pair capture images of the same wheel targets 8 when the vehicle lift 4 is in the second position (Figure 2).

The front camera 16 is arranged within the image capturing device 15 in order that its optical axis T1 is approximately horizontal; the front camera 18 is arranged within the image capture device 15 such that its optical axis T2 forms an angle α different to zero with the optical axis T1. Preferably, the angle α may be between approximately 15° and approximately 25°. Preferably, the angle α may be approximately 20°.

The technical effect achieved through the use of image capturing devices 15 and the two additional front-facing cameras 18, angled at an angle α relative to a horizontal plane, is to enable the image capture devices 15 themselves to correctly capture images of the wheel targets 8 both when the lift 4 is in the first position and when the lift 4 is in the second position, without, however, affecting the vertical bulk of the vehicle service apparatus 10.

According to a preferred embodiment, the electronic control unit 21 is configured to capture images of the wheel targets 8 exclusively (only) by means of the two front cameras 16 when the vehicle lift 4 is in the first position. The electronic control unit 21 is also configured to capture images of the wheel targets 8 exclusively (only) by means of the two front cameras 18 when the vehicle lift 4 is in the second position.

According to a preferred embodiment, the electronic control unit 21 is configured to process the images of the wheel targets 8 captured by the two front cameras 16 and/or the two front cameras 18 and determines the alignment of the wheels 3 on the basis of the captured images.

According to a preferred embodiment, the electronic control unit 21 is configured to: determine first measurement data for the wheel alignment 3 based on the images of the wheel targets 8 captured by the two cameras 16 when the lift 4 is in the first position, and to determine a second set of wheel alignment measurement data 3 based on the first set of alignment measurement data and the images of the wheel targets 8 captured by the two front cameras 18 when the lift 4 is in the second position. In this embodiment, the images of the wheel targets 8 captured by the two front cameras 16 when the lift 4 is in the first position, are processed to determine the first alignment measurement data indicative of the geometric parameters of the wheels during the initial measurement (starting zero), whereas the images of the wheel targets 8 captured by the two front cameras 18 when the lift 4 is in the second position are processed to determine the change in the wheels' geometric parameters after the manual adjustment of the wheel alignment components performed by the operator.

According to a preferred embodiment, the electronic control unit 21 may further be configured to determine third alignment data on the basis of the first alignment data and the second alignment data. The electronic control unit 21 may further be configured to compare the third alignment data with predetermined alignment data and to determine either a correct wheel-alignment condition or an incorrect wheel-alignment condition on the basis of the outcome of said comparison. The predetermined alignment data may be provided, for example, by the vehicle manufacturer and stored in the electronic control unit 21. The alignment data may comprise predetermined geometric wheel parameters corresponding to a correct wheel-alignment condition.

The electronic control unit 21 may also be configured to provide the operator, for example via an interface device 21b, with instructions guiding the operator on the adjustment to be made to the wheel adjustment mechanisms 3 based on a comparison between the third set of alignment data and the pre-set alignment data.

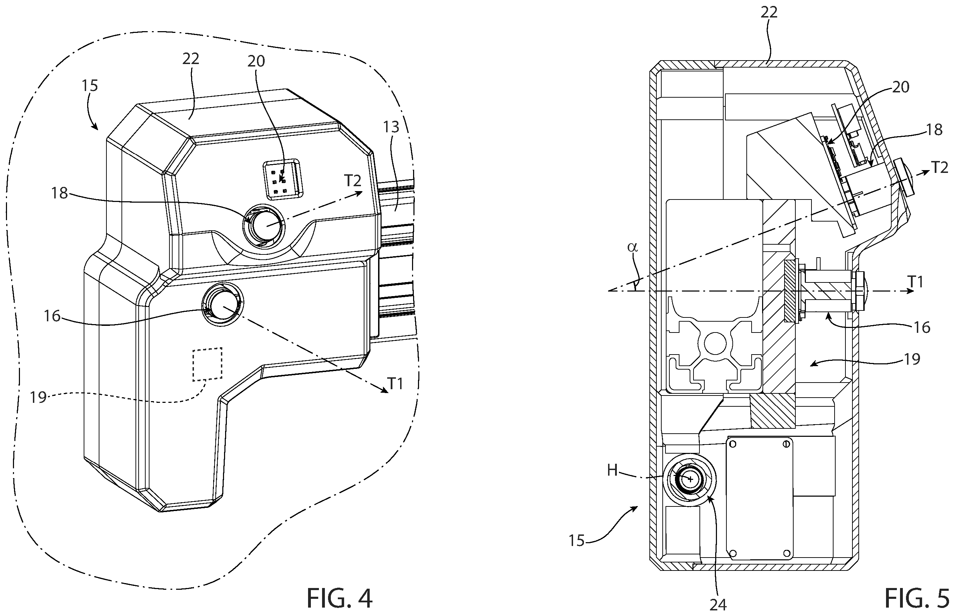

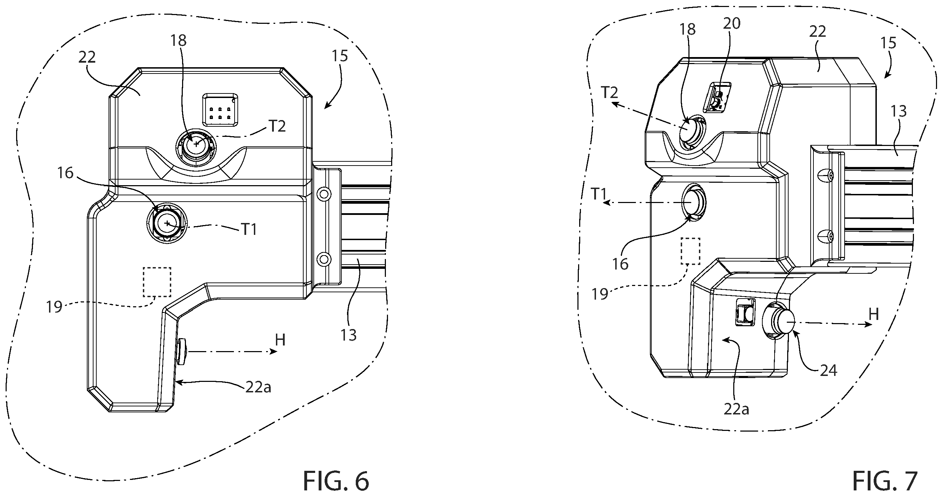

With reference to Figures 4-7, the two image capture devices 15 each comprise an external box-shaped housing or casing 22 which is coupled to one end of the bar 13. According to a preferred embodiment, the front-facing cameras 16 and 18 are fixedly arranged vertically within the housing 22, one above the other. In the example illustrated in Figures 4-7, the front-facing camera 18 is positioned at the top of the housing 22, whilst the front-facing camera 16 is positioned at the bottom of the housing, below the front-facing camera 18.

Housing 22 is made of a rigid material, such as a polymer-based material (plastic), it is roughly prismatic in shape and has, on its front wall facing lift 4, two throughholes which are at least partially traversed by the optical assemblies (lenses) of the two front cameras 16 and 18.

With reference to the attached Figures, the two image capture devices 15 also preferably comprise two sets of infrared light sources 19 and 20. One set of infrared light sources 19 is associated with the front camera 16 and is configured to emit beams of light in the infrared spectrum towards the-wheels 8 when the lift 4 is in the first position and the front camera 16 is activated. The other group of infrared light sources 20 is associated with the front camera 18 and is configured to emit beams of light in the infrared spectrum towards the-wheel 8 when the lift is in the second position and the front camera 18 is activated. Conveniently, the sets of infrared light sources 19 and 20 are housed inside the housing 22 against the front wall. The housing 22 may be fitted with windows which face the infrared light source assemblies 19 and 20 and are configured so that the beams generated by them pass through them. The windows may be open (through-type) or closed by a layer of material transparent to infrared radiation.

Conveniently, the front-facing cameras 16 and 18 are cameras operating in the infrared spectrum. The electronic control unit 21 may be configured to selectively activate (switch on) the front camera 16 and the infrared lighting source assembly19 when the vehicle lift 4 is in the first position. The electronic control unit 21 may be configured to selectively activate (switch on) the front camera 18 and the infrared lighting source assembly 20 when the vehicle lift 4 is in the second position.

The technical effect is to reduce the impact of external light noise on measurement accuracy.

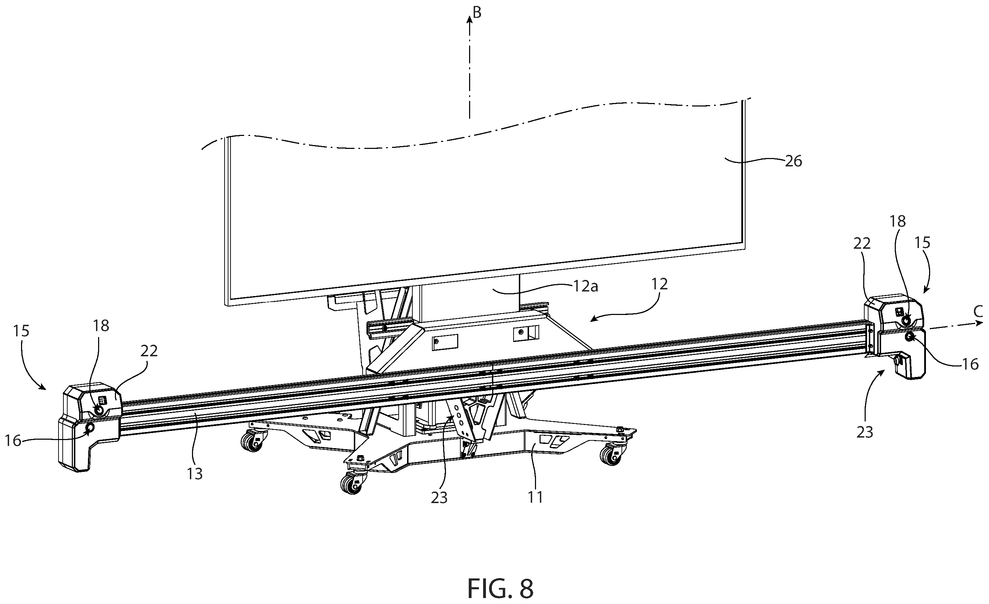

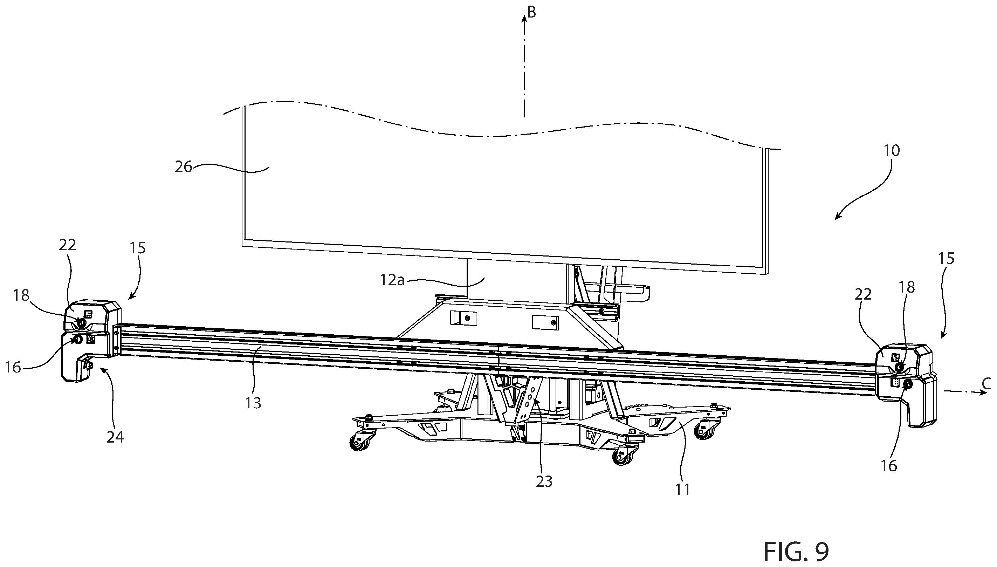

According to one possible embodiment shown in Figures 8 and 9, the vehicle service apparatus 10 also comprises a centrally positioned calibration target 23. According to one possible embodiment, the image acquisition devices 15 also comprise calibration cameras 24 which are oriented approximately towards one another and are configured to capture an image of the central calibration target 23.

According to one possible embodiment shown in Figures 8 and 9, the calibration target 23 is positioned approximately proximal to the midpoint of the bar 13 along the C-axis. Conveniently, the central calibration target 23 is fixedly connected to the bar 13. Conveniently, the central calibration target 23 comprises a first target element facing one side-view camera 24 and a second target element facing the other side-view camera 24. According to one possible embodiment shown in the accompanying Figures, the first and second target elements forming the central calibration target 23 are arranged below the bar 13, opposite one another. According to a possible embodiment shown in Figures 8 and 9, the first and second target elements forming the calibration target 23 are arranged in a V-shape.

With reference to Figures 5, 8 and 9, the two calibration cameras 24 are permanently mounted in their housing 22 at a predetermined distance from one another and in predetermined positions relative to the two pairs of front cameras 16 and 18.

In the example shown in Figures 5, 8 and 9, each side camera 24 is fixed/rigidly mounted on one side 22a of the housing 22 in a position immediately adjacent to, or close to, the front camera 16. The relative positioning of the side camera 24 with respect to the front cameras 16 and 18, and/or vice versa, may be pre-set and stored in a memory unit (not shown) of the electronic control unit 21 of the vehicle service device 10.

The relative position of each of the two side-mounted cameras 24 in relation to the front-mounted cameras 16 and 18, and/or vice versa, can be determined and stored, for example, during an initial calibration and/or production phase of the vehicle service unit 1.

The memory unit may also contain information regarding the position and/or distance of each calibration camera 24 relative to the position of each of the front cameras 16 and 18.

It should be noted that the relative and/or absolute "position" of one of the cameras 16, 18 or 24 may be determined by the electronic control unit 21 through the implementation of one or more computer vision solving algorithms, which are configured to solve PnP (Perspectiven-Point) and/or EPnP (Efficient PnP), and/or SQPnP (described by Terzakis and Lourakis in the proceedings of the European Conference on Computer Vision (ECCV) 2020, 478-494), and/or RANSAC or similar methods.

The calibration cameras 24 are arranged within the corresponding housing 22 in order that their respective fields of view (indicated by the arrows H in the attached figures) are directed towards the central calibration target so as to capture images containing the target 23 itself, hereinafter referred to as 'target images'. The side cameras 24 are configured to provide the target images in the form of data and/or signals.

The electronic control unit 21 is operationally connected to the two side-view cameras 24 to receive the target images. The electronic control unit 21 is also configured to determine, on the basis of the target images received, the actual (real) position of each front camera 16 and 18 relative to the central target 23. The electronic control unit 21 is also configured to determine the relative position of one calibration camera 24 with respect to the other calibration camera 24 and/or the absolute position, based on the positions of the front-facing cameras 16 and 18 determined relative to the calibration target 23.

The technical effect achieved through the combined use of front cameras 16 and 18 and the central calibration target 23, which is integral to bar 13, is that the electronic control unit 21 is able to determine, with high precision and in a fully automatic manner, the actual positions of the side cameras 24 relative to the calibration target 23. The Applicant has found that by positioning the calibration target 23 centrally, fixed to the bar 13, a convenient fixed reference is established within the measuring apparatus 10, which can be used to determine with high precision the actual positions of the two pairs of front-facing cameras 16 and 18.

The electronic control unit 21 is also configured to determine the position of each front camera 16 and 18 based on the positions of the side cameras 24. The orientation of each front camera 16 and 18 relative to the calibration target 23 can be conveniently determined by the electronic control unit 21 by combining information relating to its own position relative to the corresponding front cameras 16 and 18 of the auxiliary image capture device 15, with the information relating to the orientation of the front cameras 16 and 18 as determined relative to the central calibration target 23.

The relative pose of each front camera 16 and 18 of the image acquisition device 15 with respect to the respective front camera 16 and 18 of the other image capture device 15 can be conveniently determined by the control system 10 by combining information relating to the poses of the front cameras 16 and 18 determined relative to the poses of their respective adjacent side cameras 24.

The technical result achieved is the ability to determine, fully automatically and in real time, the actual positioning of the front-facing cameras 16 and 18.

The electronic control unit 21 is also configured to calibrate the front cameras 16 and 18 of the image capture devices 15 on the basis of their determined positions. The calibration of the front-facing cameras 16 and 18 may be performed by the electronic control unit 21 determining a deviation between the actual poses of the front-facing cameras 16 and 18 and the poses of those cameras stored during a previous calibration. The electronic control unit 21 may be configured to regulate or adjust, during calibration, one or more control parameters associated with the front cameras 16 and 18 on the basis of the determined deviation.

The technical effect achieved is to ensure that service apparatus 10 carries out the calibration (auto-calibration) of front-facing cameras 16 and 18 fully automatically.

It is understood that the electronic control unit 21 may be configured in such a way as to carry out, in addition to or as an alternative to, a calibration on the side cameras 24 that is entirely analogous to that described above and implemented in the front cameras 16 and 18.

According to the present invention, the electronic control unit 21 may be configured in such a way as to determine and store, fully automatically in the memory unit, on a repetitive basis, for example at predetermined intervals, the positions and/or calibration of the side cameras 24, and/or the positions and/or calibration of the front cameras 16 and 18.

According to one possible embodiment, the vehicle service apparatus 10 may be configured to perform, in addition to determining the vehicle's alignment, calibration functions for advanced driver assistance systems (ADAS) 30 (Advanced Driver Assistance Systems), which are configured to perform calibration operations/functions for ADAS devices, referred to as ADAS electronic devices 32, fitted on board the vehicle 2.

It is also understood that ADAS electronic devices 32 may comprise any device, assembly or sensor commonly comprised in a vehicle's advanced driver assistance system. For example, the ADAS electronic devices 32 of the vehicle 2 may selectively comprise: a radar sensor, an optical sensor, a camera, a LIDAR sensor, an ultrasonic sensor, an infrared (IR) sensor, or any other similar sensor.

According to this embodiment, the vehicle service apparatus 10 may comprise calibration devices 25 and 26. A calibration device 26 may, for example, comprise a monitor mounted on the support structure 12, which is designed to display calibration targets for optical devices (such as cameras) of the ADAS system 30. The calibration device 25 may comprise, for example, a radar calibration panel mounted so as to slide horizontally along the bar 13.

The operating method of the vehicle service system 1 described above will be explained below.

Preferably, the vehicle service system 1 may automatically calibrate the front cameras 16 and 18 based on target images of the central calibration target 23 captured by the side cameras 24. These operations may be carried out by a calibration algorithm implemented by the electronic control unit 21 on the basis of stored data relating to the poses of the front cameras 16 and 18, which were previously determined (and/or pre-set - factory-calibrated) and data obtained from processing the target images captured by the calibration cameras 24 as described above. The calibration of the front cameras 16 and 18 can be carried out automatically when the wheel alignment is determined. The calibration operations enable the vehicle service system 1 to detect the relative spatial positions between the cameras 16, 18 and 24 of the two image acquisition devices 15 and/or with respect to the reference system SR, and to store them in the memory unit. Characterisation tables containing correction parameters associated with changes in spatial positions as temperature varies may also be stored in the memory unit. The technical effect of the calibration is to increase the accuracy of the alignment measurement. The dimensions of the bar 13 are, in fact, subject to variation when there is a change in temperature and/or distortions caused by forced displacements, or an accidental/unintentional mechanical shock. For example, temperature variations cause the bar 13 to expand and/or contract, which alters the spatial position of the camera 16, and/or 18, and/or 24 of an image acquisition device 15 relative to the camera 16, and/or 18 and/or 24 of the other image capture device 15.

The method also comprises the step of determining the wheel alignment 3. The method comprises the step of positioning the platform 6 of the vehicle 2 on in the first position, positioning the vehicle 2 on the platform 6, attaching the wheel targets 8 to the wheels 3, and positioning the vehicle service apparatus 10 in front of vehicle 2.

The method also comprises moving bar 13 in order to arrange the pair of cameras 16 of the two image-capture devices 15 at a predetermined operating height relative to the ground S, and to activate the pair of cameras 16 to capture images of the wheel targets 8. At this step, the two sets of lighting sources 19 are to be switched on to emit beams towards the wheel targets 8. At this step, the pair of cameras 18 are not to be switched on.

The method also comprises determining, via the electronic control unit 21, the geometric alignment parameters of the wheels 3 on the basis of images of the wheel targets 8, taking into account the relative positions of the cameras 16 and/or their absolute positions with respect to the reference frame SR.

The method also comprises checking whether the geometric alignment parameters of the three wheels satisfy a condition of correct alignment or a condition of incorrect alignment. At this step, for example, the condition of correct alignment or the condition of incorrect alignment can be determined on the basis of a comparison between the determined geometric alignment parameters of the three wheels and the corresponding pre-set geometric alignment parameters stored in the memory unit.

When an incorrect alignment condition is detected, the electronic control unit 21 communicates information regarding the incorrect alignment to the operator via the interface device 21b. Information relating to the incorrect alignment may include, for example, an incorrect alignment message, and/or data specifying which wheels are out of alignment, and data indicating the adjustment to be made to the misaligned wheel to meet the correct alignment condition.

When an incorrect alignment condition is detected, an alignment adjustment procedure is carried out, which comprises raising the lift 4 from the first position to the second position. When the lift 6 reaches the second position, the electronic control unit 21 may conveniently perform a calibration of the cameras 16, 18 and 24 of the two image capture devices 15.

The operator can then manually adjust the control mechanisms to regulate the suspension based on the suspension data generated by the vehicle service apparatus 10. At this step, the electronic control unit 21 of the vehicle service apparatus 10 activates the pair of cameras 18 which capture images of the wheel targets 8. At this step, the electronic control unit 21 of the vehicle service apparatus 10 activates the set of light sources 22, which project a beam onto the wheel targets 8. At this step, the electronic control unit 21 of the vehicle service device 10 does not activate the pair of cameras 16 (which remain switched off).

The electronic control unit 21 determines, in the manner described above, the geometric parameters of the wheels 3 on the basis of the images of the wheel targets 8 and, if calibration has been carried out, also on the basis of the relative and/or absolute spatial positions of the two cameras 18. The electronic control unit 21 determines, in the manner described above, whether the alignment is correct or incorrect on the basis of the determined geometric parameters of the wheels 3. The electronic control unit 21 determines and provides the operator with alignment information based on the processing of the target images 8.

The technical effect achieved is to conveniently assist the operator in adjusting the wheel alignment mechanisms 3 until the correct alignment is achieved.
The vehicle service system offers numerous advantages. The vehicle service system conveniently assists and guides the operator in carrying out wheel alignment operations. Thanks to the presence of the two pairs of cameras, the vertical bulk of the vehicle service unit is minimised, whilst the vertical travel of the boom is reduced. The reduced vertical movement of the bar results in greater stability and safety when using the vehicle service unit, particularly with regard to the calibration device 26, which generally consists of a large monitor. Furthermore, the cameras provide a wide angular coverage, allowing the wheel targets to be framed on any type of vehicle. The required angular coverage, in fact, varies with the wheelbase of the vehicles to be measured. Finally, the calibration carried out using the 24 calibration cameras enables the electronic control unit 21 to detect any displacement, however slight, caused by thermal expansion or contraction, or by shock or mechanical displacement of one assembly relative to another. Consequently, it is possible to compensate for these variations using specific algorithms, thereby restoring the system's accuracy.

## Claims

1. A vehicle service system (1) configured to determine alignment information of wheel (3) for a motor vehicle (2) in a vehicle service area (5),
the vehicle service system (1) comprises:
a vehicle lift (4) resting on the ground surface (S) of the vehicle service area (5) and provided with a movable platform (6) on which the vehicle (2) is supported, the vehicle lift (4) having a first longitudinal axis (A) and being configured to move the platform (6) between a first position, wherein the platform (6) is lowered and substantially rests on the ground surface (S), and at least a second position, wherein the platform (6) is lifted above the first position to a predetermined height from the ground surface (S),
wheel targets (8) which are coupled to the respective wheels (3) of the vehicle (2),
a vehicle service apparatus (10) which is arranged in the vehicle service area (5) adjacent to the said vehicle lift (4) transversely to the longitudinal axis (A) and comprises:
a base unit (11) which rests on the ground (S), a support structure (12) which is coupled to said base unit (11) and extends along a first axis (B),
a support bar (13) which is coupled to the said support structure (12) and extends along a second axis (C) approximately perpendicular to the said first axis (B),
two image-capturing devices (15) which are mounted on opposite ends of the said support bar (13) and comprise two pairs of front cameras (16)(18) having respective fields of view for image capture which differ from one another and are directed towards respective wheel targets (8) of the vehicle (2) in order that:
a pair of first cameras (16) of the two image acquisition devices (15) captures images of the wheel targets (8) when the vehicle lift (4) is in the first position,
and the pair of second cameras (18) of the two image acquisition devices (15) captures images of the wheel targets (8) when the vehicle lift (4) is in the second position.

2. Vehicle service system according to claim 1, wherein the vehicle service apparatus (10) comprises an electronic control unit (21) configured to selectively control image acquisition of the wheel targets (8), by activating the pair of first cameras (16) when the vehicle lift (4) is in the first position and by activating the pair of second cameras (18) when the vehicle lift (4) is in the second position.

3. Vehicle servicing system according to claim 2, wherein the electronic control unit (21) is configured to determine first geometric wheel alignment parameters indicative of the alignment on the basis of images of the wheel targets (8) captured by the pair of first cameras (16), and determines a correct alignment condition or an incorrect alignment condition on the basis of the first geometric alignment parameters.

4. A vehicle servicing system according to claim 3, wherein the electronic control unit (21) is configured to determine second geometric parameters of the wheels indicative of the alignment on the basis of images of the wheel targets (8) captured by the pair of second cameras (16), and determines a correct alignment condition or an incorrect alignment condition on the basis of the second geometric parameters.

5. A vehicle service system according to any of the preceding claims, wherein the first front camera (16) is arranged within the image capture device (15) such that its first optical axis (T1) is approximately horizontal; and the second front camera (18) is arranged within the image capture device (15) such that it presents a second optical axis (T2) which forms an angle (α) other than zero with the first optical axis (T1).

6. Vehicle servicing system according to any of the foregoing claims, wherein the vehicle servicing apparatus (10) comprises a central calibration target (23) and the image acquisition devices (15) comprise respective calibration cameras (24) which are oriented approximately towards one another and are configured to capture an image of the central calibration target (23).

7. A vehicle service system according to claim 6, wherein the central calibration target (23) is arranged approximately in a position proximal to the midpoint of the support bar (13) along the second axis (C).

8. A vehicle service system according to claims 6 or 7, wherein the image capture device comprises an outer housing (22) which is coupled to one end of the bar (13); the first front camera (16) and the second front camera (18) are fixedly arranged inside the housing (22) in a vertical orientation, one above the other.

9. A vehicle service apparatus configured to determine wheel alignment information (3) for a motor vehicle (2) positioned on a vehicle lift (4) which is provided with a movable platform (6) on which the vehicle is supported (3); the vehicle lift (4) has a first longitudinal axis (A) and is configured to move the platform (6) between a first position, in which the platform (6) is lowered, resting approximately on the ground (S), and at least a second position in which the platform (6) is raised above the first position to a specific height above the ground (S), and wheel targets (8) which are coupled to respective wheels (3) of the vehicle (2),
the vehicle servicing apparatus (1), which is arranged adjacent to the said lift (4) transversely to the longitudinal axis (A) and comprises:
a base unit (11) which is arranged on the ground (S),
a support structure (12) which is coupled to said base unit (11) and extends along a first axis (B),
a support bar (13) which is coupled to the said support structure (12) and extends along a second axis (C) approximately perpendicular to the said first axis (B),
two image-capturing devices (15) which are mounted at opposite ends of the said support bar (13) and comprise two pairs of front-facing cameras (16)(18) having respective fields of view for image capture that differ from one another and are directed towards respective wheel targets (8) of the vehicle (2) in such a way that:
a pair of front cameras (16) on the two image-capture devices (15) capture images of the wheel targets (8) when the lift (4) is in the first position and
the pair of secondary cameras (18) on the two image-capture devices (15) captures images of the wheel targets (8) when the lift (4) is in the second position.

10. A vehicle service apparatus according to claim 9, comprising an electronic control unit (21) which is configured in order to activate the pair of first cameras (16) and the pair of second cameras (18) so as to selectively capture images of the-wheel targets (8) via the pair of first cameras (16) when the lift (4) is in the first position, and images of the wheel targets (8) via the pair of second cameras (18) when the lift (4) is in the second position.

11. A vehicle service apparatus according to claim 10, wherein the first front-facing camera (16) is arranged within the image capture device (15) such that its first optical axis (T1) is approximately horizontal; and the second front-facing camera (18) is arranged within the image capture device (15) in such a way that it has a second optical axis (T2) which forms an angle (α) different to zero with the first optical axis (T1).

12. A vehicle service device (10) according to claim 11, comprising a central calibration target (23) and the image acquisition devices (15) comprise respective calibration cameras (24) which are oriented approximately towards one another and are configured to capture an image of the central calibration target (23).

13. A vehicle service device (10) according to claim 12, wherein the image capture device comprises an external housing (22) which is coupled to one end of the bar (13); the first front camera (16) and the second front camera (18) are fixedly arranged inside the housing (22) in a vertical orientation, one above the other.

14. A method for controlling the wheel alignment (3) of a vehicle (2) implemented via a vehicle service system (1) according to any one of claims 1 to 7, comprising the steps of:
position the vehicle on the lift (4) in the first position,
activate the first cameras (16) of the two image-capturing devices (15) to capture initial images of the wheel targets (8) mounted on the wheels (3) of the vehicle (2),
determine the wheel configuration based on the initial images,
move platform (6) of the lift (4) from the first position to the second position,
activate the second cameras (18) of the two image-capturing devices (15) to capture second images of the wheel targets (8) mounted on the wheels (3) of the vehicle (2),
determine the alignment based on the second images.

15. A method according to claim 14 comprising the steps of:
manually adjust the wheel alignment adjustment mechanisms on the vehicle (2) to alter the wheel alignment (3) when the vehicle (2) is positioned on the lift (4) in the second position,
activate the second cameras (18) of the two image-capturing devices (15) to capture second images of the wheel targets mounted on the wheels (3) of the vehicle (2),
check whether the alignment meets the criteria for correct or incorrect alignment based on the second set of images.
